(19) **Europäisches Patentamt**
**European Patent Office**
**Office européen des brevets**

(11) **EP 1 374 986 B1**

(12) **EUROPÄISCHE PATENTSCHRIFT**

(45) Veröffentlichungstag und Bekanntmachung des Hinweises auf die Patenterteilung:
**02.05.2007 Patentblatt 2007/18**

(21) Anmeldenummer: **02722995.4**

(22) Anmeldetag: **13.03.2002**

(51) Int Cl.:
*B01J 8/10* (2006.01)    *B01J 19/08* (2006.01)
*B01J 19/18* (2006.01)    *B04B 5/12* (2006.01)
*B01J 8/18* (2006.01)    *B01J 8/02* (2006.01)

(86) Internationale Anmeldenummer:
**PCT/RU2002/000086**

(87) Internationale Veröffentlichungsnummer:
**WO 2002/076599 (03.10.2002 Gazette 2002/40)**

(54) **VERFAHREN UND VORRICHTUNG FÜR EINE WÄRMESCHOCKBEHANDLUNG VON LOSEN MATERIALIEN**

METHOD AND DEVICE FOR A HEAT SHOCK TREATMENT OF LOOSE MATERIALS

DISPOSITIF ET PROCEDE DE TRAITEMENT DES MATERIAUX PULVERULENTS PAR CHOC THERMIQUE

(84) Benannte Vertragsstaaten:
**AT BE CH CY DE DK ES FI FR GB GR IE IT LI LU MC NL PT SE TR**

(30) Priorität: **26.03.2001 RU 2001108157**

(43) Veröffentlichungstag der Anmeldung:
**02.01.2004 Patentblatt 2004/01**

(73) Patentinhaber: **Institut Kataliza Imeni G.K. Boreskova Sibirskogo Otdeleniya Rossiiskoj Akademii Nauk Novosibirsk, 630090 (RU)**

(72) Erfinder:
• **PINAKOV, Valery Ivanovich**
 **Novosibirsk, 630090 (RU)**
• **STOYANOVSKY, Oleg Ivanovich**
 **Novosibirsk, 630090 (RU)**
• **GRINBERG, Boris Efimovich**
 **Novosibirsk, 630058 (RU)**
• **DRYAB, Valentin Nikolaevich**
 **Novosibirsk, 630090 (RU)**

• **PIKAREVSKY, Alexandr Alexandrovich**
 **Novosibirsk, 630090 (RU)**
• **MESCHERYAKOV, Anatoly Alexandrovich**
 **Novosibirsk, 630090 (RU)**
• **MAKAROV, Alexey Igorevich**
 **Berdsk, 630190 (RU)**
• **TANASHEV, Yury Yuryevich**
 **Novosibirsk, 630058 (RU)**
• **PARMON, Valentin Nikolaevich**
 **Novosibirsk, 630090 (RU)**

(74) Vertreter: **Goddar, Heinz J. FORRESTER & BOEHMERT Pettenkoferstrasse 20-22 80336 München (DE)**

(56) Entgegenhaltungen:
EP-A2- 0 186 474    WO-A-99/16543
WO-A-99/16544    DE-A1- 3 639 046
DE-U1- 8 706 539    RU-C1- 2 107 657
RU-C1- 2 115 634    US-A- 5 603 907
US-A- 5 820 836    US-A- 5 965 097

EP 1 374 986 B1

**Beschreibung**

Die Erfindung bezieht sich auf die apparative Gestaltung von Prozessen einer kurzzeitigen Wärmebehandlung und/oder Abschreckung schüttbarer Materialien und kann im Stadium der thermochemischen Aktivierung in der Produktion von Katalysatoren, Trägern, Adsorbenzien, Trockenmitteln, Füllstoffen, Keramik, magnetischen Werkstoffen, anorganischen Pigmenten, festen Elektrolyten, Heilmittel- und kosmetischen Präparaten usw., bei der Durchführung von Prozessen der Trocknung/Abkühlung in der Chemieindustrie, Lebensmittelindustrie, in der holzverarbeitenden Industrie u. a. angewendet werden.

Die Erwärmung von schüttbaren Materialien mit einer Geschwindigkeit von mehr als 100 Grad C in der Minute mit nachfolgender Abkühlung bzw. Abschreckung ist auf vielen Gebieten der chemischen Technologie notwendig. Beispielsweise macht sich bei der Herstellung von oxidischen Trägern und Katalysatoren die Erwärmung kristalliner sauerstoffhaltiger Verbindungen auf eine Temperatur von 300°C und darüber erforderlich. Die Phasenumwandlungen der sauerstoffhaltigen Verbindungen von Nichtübergangs- und Übergangsmetallen - Hydroxiden, Salzen u.a.m. werden bei ihrer Erwärmung durch die Besonderheiten zweier physikalisch-chemischer Hauptprozesse bestimmt: der Entfernung funktioneller Gruppen und des Übergangs der kristallinen Struktur der Ausgangs Verbindung in die kristalline Struktur des Oxids. Bei üblichen Erwärmungsgeschwindigkeiten, die höchstens einige zehn °C/min betragen, sind die genannten Prozesse gekoppelt. Deshalb geht das Ausgangssystem aus einem reaktionsschwachen Zustand in einen anderen in chemischer Hinsicht reaktionsträgen Zustand über. Die Situation ändert sich grundsätzlich, wenn die Thermolyse der Ausgangs Verbindungen unter den Bedingungen durchgeführt wird, die von dem thermodynamischen Gleichgewicht fernliegen. Dies erlaubt es, aus kristallischen Stoffen qualitätsmäßig neue metastabile Strukturen der amorphen festen Phase zu formieren, die sich durch aufgespeicherte Energe und erhöhte Reaktionsfähigkeit kennzeichnen und bei der Herstellung von Erzeugnissen der Chemieindustrie weitgehend verwendet werden.

Bekannt ist ein Verfahren zur Aktivierung kristalliner sauerstoffhaltiger Verbindungen durch schnelle Erwärmung - mit einer Geschwindigkeit von Hunderten und Tausenden °C/min -von Pulverteilchen durch deren Kontakt mit dem Strom eines gasförmigen Wärmeträgers, z.B. mit Rauchgasen, oder eines festen Wärmeträgers - Methode der thermochemischen Aktivierung /TCA/ (RF-PS Nr. 2064435, C 01 F 7/44, 1994). Im Ergebnis einer solchen Erwärmung bilden sich Zersetzungsprodukte, welche wertvolle chemische Eigenschaften besitzen. Von großer Bedeutung für die Fixierung des amorphen Zustandes ist dabei eine schnelle Abkühlung bzw. Abschreckung von Aktivierungsprodukten am Austritt aus der Heißzone. Nachteilig an dem Verfahren sind staubbeladene Gasausbrüche, die schädliche Beimengungen (NO*, SOX, CO, Kohlenwasserstoffe) enthalten, die Möglichkeit einer Verunreinigung von Ausgangs Stoffen durch Beimengungen im Brennstoff und Produkte seiner unvollständigen Verbrennung, die relativ lange Dauer des Prozesses der Abkühlung bzw. Abschreckung (10 Minuten auf die Temperatur 60°C) sowie die niedrige Effektivität der Ausnutzung der Wärmeträgerenergie, wobei ein hoher spezifischer Energieaufwand die Folge ist, der in der Regel 5 kJ/g Rohstoff übersteigt, was um eine Größenordnung höher ist als bei Anwendung von effektiveren, keine wesentlichen Wärmeverluste aufweisenden Verfahren zur Erwärmung von Feststoffen.

Eines von solchen Verfahren zur effektiven Erwärmung kristalliner Verbindungen ist deren Bestrahlung mit einem konzentrierten Bündel beschleunigter Elektronen - Methode der Elektronenstrahlaktivierung /ESA/ (RF-PS Nr. 2071934, C 01 B 13/18, C 22 B 1/10, 1922), bei welcher die Absorbtion der Strahlungsenergie durch den Stoff und deren Umwandlung in Wärmeenergie erfolgt, die für den Verlauf der erforderlichen Phasenumwandlungen ausreicht. Bei der Anwendung der ESA-Methode kann der Energieaufwand für die Aktivierung auf 0,5 bis 1,0 kJ/g gesenkt werden. Nachteile der Aktivierung unter Einsatz eines Elektronenbeschleunigers sind die begrenzte Geschwindigkeit der Pulvererwärmung, nämlich höchstens 300 °C/min bei einer Leistung der einfallenden Strahlung von weniger als 50 W/cm2, und die schwache Abschreckung von Produkten, was zu einer unvollständigen Amorphisierung fuhrt, sowie hohe Kosten entsprechender Apparate.

Versuch einer Vergrößerung der Abmessungen der Rinne, um eine Leistung von mehr als 2 kg/h zu erreichen.

Nächstliegendes Analogon der Erfindung ist eine Anlage (RF-PS Nr. 2115634, C 04 B 35/52, 1998), die zur Wärmebehandlung schüttbarer Materialien bestimmt ist. Die Anlage umfaßt einen Behälter für Ausgangsmaterial, Erhitzer und einen Drehantrieb.

Das in dieser Patentschrift RU-PS 2115634 offenbarte Verfahren stellt nach der Gesamtheit von wesentlichen Merkmalen eine am nächsten kommende Analogielösung für die Erfindung dar und offenbart ein Verfahren zur Wärmestoßbehandlung von schüttbaren Materialien, welches Eintragen, Verteilen und Verschieben des Ausgangsmaterials über eine erhitzte Oberfläche, wobei die Ausgangsmaterialteilchen sich in relativer Bewegung und in Kontakt befinden, und den Ablauf des Fertigproduktes in einen Speicher umfaßt.

Aus der WO-A-99/16543 ist eine Anlage sowie ein Verfahren zur Behandlung schüttbarer Materialien bekannt, wobei ein rasches Kühlen notwendig ist, um eine reversible Reaktion zu vermeiden. Die Anlage weist einen Erhitzer und einen Drehantrieb auf. In einem endothermen Prozeß wird die Wärme kurzzeitig im Laufe von 5 Minuten in die Schicht eines Katalysators einer Wabenstruktur zugeführt und abgeführt. Die Zyklizität des Prozesses wird durch die Rotation einer Wärmedurchgangsanordnung bezüglich der Strömungen von Gaswärmeträgern gewährleistet. Dabei ist ein ortsfester Katalysator in der Wärmedurchgangsanordnung angeordnet. Es wird eine rasche Abkühlung ausgenutzt, um die reversible Reaktion zu vermeiden.

Die Erfindung löst folgende Aufgaben: Regelung der Durchflußmenge des schüttbaren Materials; dessen geordnete Verteilung über die erhitzte Oberfläche mit innigem Kontakt; Erhöhung der Erwärmungsgeschwindigkeit des schüttbaren Materials; Verringerung der Kontaktzeit des Materials mit der erhitzten Oberfläche; Regelung der Kontaktzeit; schnelle Abkühlung bzw. Abschreckung des Wärmebehandlungsproduktes zur Fixierung seiner metastabilen Struktur; Verminderung des Energieaufwandes.

Die Aufgabe wird mit Hilfe einer Anlage zur Wärmestoßbehandlung von schüttbaren Materialien gelöst, die eine in einem Gehäuse gelagerte Senkrechtwelle mit einem daran befestigten Teller und einen im unteren Teil eines Ausgangsmaterial-Behälters angeordneten Durchflußmengenregler für Material umfaßt, wobei ein Drehantrieb die Welle in Rotation versetzt und ein System zur Abkühlung bzw. Abschreckung der Produkte der Wärmestoßbehandlung vorhanden ist und wobei die Tellerarbeitsfläche kegelig oder mit einer eine Verbreiterung nach oben sichernden Krümmung ausgebildet ist.

Der Erhitzer kann unter dem Teller angeordnet, am Teller befestigt oder über dem Teller installiert sein. Als Wärmequellen werden elektrische Erhitzer, Gasbrenner oder andere mit Brennstoff betriebene Brenner verwendet. Der Erhitzer des Tellers kann in einem wärmeisolierten Grundkörper des Gehäuses der Anlage angebracht sein. Der in Axialrichtung verschiebbare Oberteil des wärmeisolierten Gehäuses der Anlage bildet mit der Arbeitsfläche des Tellers einen Spalt, welcher in eine Abkühlungszone übergeht. Die Abkühlungszone für Produkte der Wärmestoßbehandlung ist als Hohlraum ausgebildet, der durch die Mantelflächen des Gehäuses und des Grundkörpers der Anlage gebildet ist. Die Mantelflächen von Gehäuse und Grundkörper werden einer Zwangskühlung unterzogen. Die Anlage kann mit einem Mantel zum Sammeln des Produktes und mit Produktspeichern versehen sein. Die Abkühlungszone ist mit dem Hohlraum des Mantels zum Sammeln des Produktes verbunden. Die Mantelfläche des Gehäuses der Anlage kann kegelig oder anders profiliert mit Verjüngung nach unten ausgebildet sein. Der Durchflußmengenregler für Ausgangsmaterial ist in Form einer in Axialrichtung bewegbaren Buchse ausgebildet, die mit dem kegeligen oder anders profilierten Wellenteil zusammenwirkt, der in die Beschickungsfläche des Tellers übergeht. Der Behälter für schüttbares Ausgangsmaterial kann mit einem Erhitzer ausgestattet sein. Der Spalt zwischen dem Teller und dem Oberteil des Gehäuses ist mit Hohlräumen für die Heißdampfentnahme und für die Erwärmung der Wände des Ausgangsmaterial-Behälters verbunden.

Die Axialverschiebung des Durchflußmengenreglers gewährleistet eine Änderung des Flächeninhalts des Spaltes zwischen der unteren Stirnseite der Buchse und dem kegeligen Teil der Senkrechtwelle und somit eine Regelung der Durchflußmenge des schüttbaren Ausgangsmaterials. Eine Besonderheit des Durchflußmengenreglers ist, daß ein solcher Spalt vorgesehen werden kann, bei dem das Durchfallen des Ausgangsmaterials durch den Durchflußmengenregler nur bei der Rotation der Senkrechtwelle stattfindet und bei deren Stillsetzung abgebrochen wird. Außerdem ist festgelegt, daß beim fixierten Spalt die Durchflußmenge des schüttbaren Materials im Arbeitsbereich der Rotationsgeschwindigkeiten der Senkrechtwelle praktisch konstant ist. Zur Sicherstellung eines innigen Kontaktes des Ausgangsmaterials mit dem erhitzten Teller und zur Erwärmung seiner Teilchen durch Wärmeübertragung "Metall → Teilchen" ist der Teller kegelförmig ausgebildet. Der Winkel $\alpha$ zwischen der Tellerarbeitsfläche und der Horizontalebene, welcher durch die Ausgangsmaterialteilchen aufgrund der Fliehkraft überwunden werden kann, hängt mit der Rotationsgeschwindigkeit $\omega$ des Tellers, mit dem laufenden Radius $r$ der Teilchenlage, d.h. dem Abstand zur Rotationsachse, dem Koeffizienten $k$ der Reibung des Ausgangsmaterials am Tellerwerkstoff, mit der Erdbeschleunigung durch eine Beziehung zusammen:

$$tg\alpha \leq (\omega\, r - k\, g) / (k\, \omega\, r + g),$$

die bedeutet, daß bei einem Winkel $\alpha$ kleiner als der entsprechend dem rechten Teil dieses Ausdrucks bestimmte Winkel die Teilchen von der Achse aus in Radialrichtung bewegt werden.

Die Mantelfläche des Grundkörpers und die Mantelfläche des Gehäuses bilden untereinander einen Kühlraum, wozu sie mit einer Kühlflüssigkeits-Zufuhrsystem versehen sind. Der Kühlraum geht in einen kegelförmigen Hohlraum des Mantels zum Sammeln des Produktes über.

Die Aufgabe wird auch mit Hilfe eines Verfahrens zur Wärmestoßbehandlung von schüttbaren Materialien gelöst, welches Eintragen, Verteilen und Bewegen des Ausgangsmaterials über eine erhitzte Oberfläche, wobei sich die Ausgangsmaterialteilchen sich in relativer Verschiebung und in Kontakt befinden, und den Ablauf des Fertigproduktes in einen Speicher umfaßt; dabei wird das Ausgangsmaterial nach dem Eintragen vermischt und gleichzeitig vorgewärmt, dosiert, gleichmäßig verteilt und über die rotierende und auf eine Temperatur von 100 bis 1500°C erhitzte Oberfläche bewegt, der Heißdampf wird entnommen, das Produkt wird im Augenblick des Ablaufs von der erhitzten Oberfläche abgeschrocken, die relative Verschiebung des Materials und der Kontakt seiner Teilchen mit der erhitzten Oberfläche kommen durch die Wirkung von Fliehkräften zustande, während die Kontaktzeit und die Kraft der Anpressung des Materials an die erhitzte Oberfläche durch Änderung ihrer Rotationsgeschwindigkeit geregelt werden. Die Abschreckung im Augenblick des Produktablaufs erfolgt durch Kontakt mit der gekühlten Oberfläche des Grundkörpers der Anlage, die Abkühlung der Oberfläche wird zwangsweise vorgenommen. Das Produkt wird auf eine Temperatur von höchstens 150°C während höchstens 5 Sekunden abgekühlt. Der Vorgang der Erwärmung-Abschreckung erfolgt während 0,5 bis 5,0 Sekunden. Die Vermischung des Ausgangsmaterials wird durch Drehmomentübertragung von dem Tellerantrieb aus bewerkstelligt, die Geschwindigkeit der Vermischung des Ausgangsmaterials wird durch Änderung der Übersetzungszahl des Antriebs geregelt. Die Dampfentnahme geschieht im Bereich des Tellers bei maximalem Heißdampfdruck. Beim Dosieren des schüttbaren Materials wird der Flächeninhalt des Dosierspaltes geändert. Mit der Änderung der Tellerdrehzahl beim Dosieren bleibt die Durchflußmenge des schüttbaren Materials konstant.

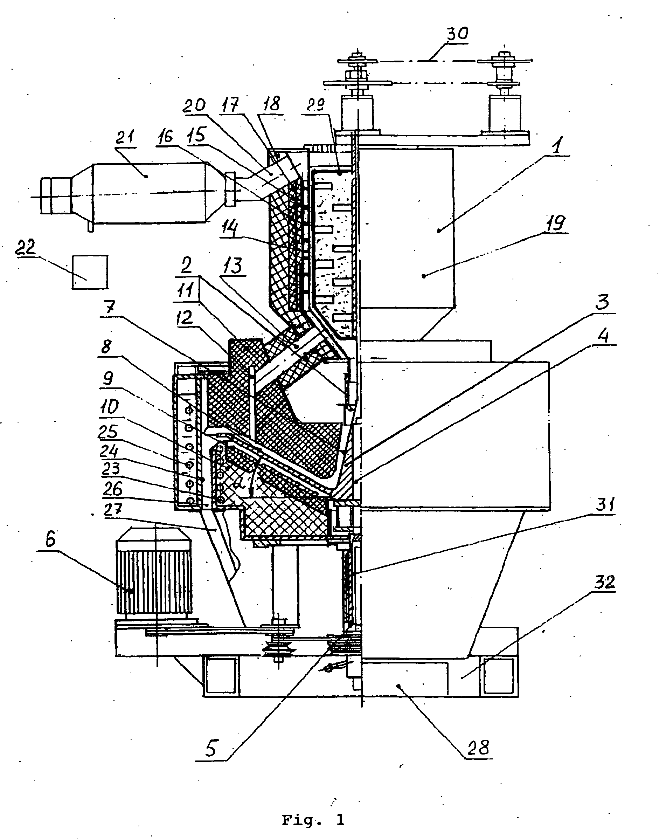

Die vorliegende Erfindung wird an Hand der Zeichnung erläutert. In Fig. 1 ist die Gesamtansicht einer konkreten Bauart der Anlage zur schnellen Erwärmung und Abkühlung von schüttbaren Materialien dargestellt.

Im unteren Teil eines Aufgabebehälters 1 ist die axial verschiebbare Buchse 2 eines Durchflußmengenreglers angeordnet. Ein Teller 3 ist an einer Welle 4 befestigt, die in einer Lagerung 5 mit Hilfe eines Antriebs 6 rotiert. Der Teller 3 weist eine Beschickungsfläche 7 (in Fg. 1 kegelig) und eine Arbeitsfläche 8 (in Fig. 1 kegelig) auf. Ein Erhitzer 9 (in Fig. 1 elektrisch) befindet sich in einem Grundkörper 10. Der Oberteil 11 des Grundkörpers 10 bildet mit der Arbeitsfläche 8 des Tellers 3 einen Spalt für den Durchlauf des zu erwärmenden Materials. In dem oberhalb des Tellers befindlichen Oberteil 11 des Grundkörpers 10 ist in einem Bereich, wo der Druck des sich bei der Erwärmung des schüttbaren Materials bildenden Heißdampfes maximal ist, ein Ringraum 12 ausgeführt, der über Stutzen 13 mit einem Hohlraum 14 für die Erhitzung der Wände des Behälters 1 verbunden ist. Der Behälter 1 besitzt Doppelwände, zwischen denen Führungen 15 angeordnet sind, welche eine spiralartige Bewegung des Dampfes längs der zylindrischen Fläche des Behälters 1 besorgen. Längs der Außenwand des Behälters 1 ist in einer Elektroisolierschicht 16 ein Erhitzer 17 installiert, der durch eine Schicht 18 wärmeisoliert und von einem Mantel 19 umschlossen ist. Ein Stutzen 20 für den Dampfaustritt aus dem Hohlraum 14 steht mit einem Wärmeaustauscher 21 in Verbindung, in welchem der Dampf kondensiert, wobei das Kondensat in einen Behälter 22 abfließt. Längs der Mantelfläche des Grundkörpers 10 sind Rohre 23 für die Zufuhr einer Kühlflüssigkeit angeordnet. Längs der Mantelfläche eines Gehäuses 24 sind ebenfalls Rohre 25 für die Zufuhr einer Kühlflüssikeit angeordnet. Der durch die Mantelflächen von Gehäuse 24 und Grundkörper 10 gebildete Kühlraum 26 geht in den kegelförmigen Hohlram 27 eines Mantels für den Produktablauf in Sammler 28 über. Im Behälter 1 ist eine Mischvorrichtung 29 untergebracht, deren Antrieb 30 sich auf dem Deckel des Behälters 1 befindet. Die Senkrechtwelle 4 weist einen Hohraum 31 für die Zufuhr einer Kühlflüssigkeit auf Alle Baugruppen der Anlage sind auf einem Rahmen 32 montiert.

Die Anlage arbeitet folgendermaßen. Nach der Beschickung des Behälters 1 mit dem schüttbaren Ausgangsmaterial wird die Welle 4 durch den Antrieb 6 in Rotation versetzt, die Erhitzer 9, 17 werden eingeschaltet und der Teller 3 wird auf eine Temperatur durchgewärmt, bei welcher man physikalisch-chemische Umwandlungen des Ausgangsmaterials zustande bringt, während das Ausgangsmaterial im Behälter 1 auf eine Temperatur durchgewärmt wird, die zur Verdampfung von chemisch nicht gebundenem Wasser ausreicht. Zur Optimierung des letzteren Prozesses wird innerhalb des Behälters 1 die Mischvorrichtung 29 in Umdrehungen versetzt, auf deren Antrieb 30 das Drehmoment von der Welle 4 übertragen wird. Nach Einstellung der geforderten Temperaturen im Behälter 1 und auf der Oberfläche 8 des Tellers 3 wird der Dosierspalt des Durchflußmengenreglers geöffnet und das schüttbare Material gelangt auf die Beschickungsfläche 7 des heißen Tellers 3, auf welcher die Erwärmung des Materials fortgesetzt wird. Bei seiner Bewegung entlang der Beschickungsfläche 7 nimmt das Ausgangsmaterial eine kinetische Energie an, die zur Überwindung einer Bremsung beim Übergang auf die Arbeitsfläche 8 des Tellers 3 ausreichend ist. Das beschriebene Schema der Zuführung des schüttbaren Ausgangsmaterials gewährleistet seine gleichmäßige Verteilung über die Arbeitsfläche 8 des Tellers 3. In Verbindung mit der vielfachen Vergrößerung des Inhalts der Oberfläche, auf welcher das Material bei dessen Bewegung über den Teller verteilt wird, wird auch ein inniger Kontakt aller seiner Teilchen ("Monoschicht") mit der heißen Arbeitsfläche 8 des Tellers 3 sichergestellt. Das Ausgangsmaterial vollführt eine umlaufende Bewegung über den Teller 3 und eine fortschreitende Bewegung in radialer Richtung, wobei Schwerkraft, Auflagerreaktion, Reibungskraft und Fliehkraft auf die Teilchen wirken. Die letztere gewährleistet den Aufstieg der Teilchen auf der kegeligen Arbeitsfläche 8 des Tellers 3 und einen innigen Kontakt mit ihr. Auf der Arbeitsfläche 8 des Tellers 3 findet eine intensive Erwärmung der Teilchen des schüttbaren Materials statt, wodurch in die gasförmige Phase heiße Reaktionsprodukte ausscheiden können, deren chemische Zusammensetzung von der Natur des Ausgangsstoffes abhängt. Falls der Ausgangsstoff funktionelle OH$^-$-Gruppen enthält (wenn es sich z.B. um Hydroxid handelt), so scheidet Heißdampf in die gasförmige Phase aus. Durch den Ringraum 12 und die Stutzen 13 strömt der Heißdampf in den Hohlraum 14 des Behälters 1 ein, wo er bei Abkühlung die Wärme an das schüttbare Material über die Wandung des Behälters 1 abgibt, gelangt dann durch den Stutzen 20 in den Wärmeaustauscher 21 und kondensiert dort. Das entstandene Wasser fließt in den Behälter 22 ab. Bei Überschreitung eines eingestellten Temperaturwertes der Innenwand des Behälters 1 aufgrund der Heißdampfwärme schaltet sich der Erhitzer 17 selbsttätig ab oder schaltet sich im weiteren wieder ein, falls die Temperatur der Wand aus irgendeinem Grunde abnimmt. Beim Ablauf vom Teller 3 hat das erwärmte Ausgangsmaterial eine Umfangskomponente der Geschwindigkeit um eine Größenordnung größer als die Radialkomponente, weshalb es seine Bewegung im Kühlraum 26 spiralartig längs der zylindrischen Oberfläche der Wand des Gehäuses 24 fortsetzt und allmählich nach unten sinkt. Somit gewährleisten die Fliehkräfte einen Kontakt der Teilchen nunmehr mit der Wand des Gehäuses 24, wodurch eine schnelle Abkühlung bzw. Abschreckung der Teilchen erfolgt, was zur Fixierung der inneren Struktur des aktivierten Produktes führt. Die weitere Abkühlung des Produktes geschieht bei dessen Bewegung im kegelförmigen Hohlraum 27 des Mantels. Weiterhin gelangt das Produkt in den Sammler 28.

Je nach den Eigenschaften des Ausgangsmaterials und den Größen seiner Teilchen ist während der Wärmestoßbehandlung eine Regelung der Erwärmungszeit durch Ändern der Rotationsgeschwindigkeit des Tellers 3 möglich.

Mit der Vergrößerung des laufenden Radius r während der Bewegung eines Ausgangsmaterialteilchens über den Teller 3 nehmen die Fliehkraft und folglich deren Quertrieb, welcher das Teilchen an die Oberfläche 8 des Tellers 3 anpreßt, und deren Projektion auf die Kegelmantellinie im Radialschnitt des Tellers zu. Je größer also der laufende Radius r ist, um so größer ist der Neigungswinkel der Arbeitsfläche 8 des Tellers 3, welcher vom Teilchen überwunden werden kann, d.h. die Tellerarbeitsfläche kann krummlinig sein - mit zunehmendem Winkel $\alpha$ bei Vergrößerung von r. Dies führt zur Vergrößerung der Anpressungskraft der Teilchen an die Arbeitsfläche 8 des Tellers 3 und zur Verbesserung der Wärmeübertragung; als Folge davon wird die Erwärmung schneller sein. Dabei nimmt auch die Zeit des Kontaktes der Teilchen mit dem Teller 3 zu, weshalb der letztere mit einem kleineren Radius ausgeführt werden kann. Somit macht die gekrümmte Tellerarbeitsfläche es möglich, den Energieaufwand zu verringern und die Geschwindigkeit der Erwärmung der Teilchen des Ausgangsmaterials zu erhöhen.

Wenn die Mantelfäche des Gehäuses 24, längs welcher die Rohre 25 für die Zufuhr einer Kühlflüssigkeit angeordnet sind, kegelig ausgebildet wird, so wird sich das Produkt, nachdem es seine umlaufende Bewegung längs derselben beendet hat, aufgrund der Schwerkraft über den Kegel der Mantelfläche des Gehäuses 24 nach abwärts bewegen. Somit wird der Kontakt des Produktes mit der Kühlfläche des Gehäuses 24 auf deren gesamter Länge erhalten bleiben, was die Effektivität der Abkühlung erhöht.

Die Anlage gewährleistet eine schnelle Erwärmung und Abkühlung, d.h. Abschreckung, des schüttbaren Materials dadurch, daß das letztere, indem es den konzentrischen Ringspalt des Durchflußmengenreglers passiert, bei der weiteren Bewegung über die Beschikkungsfläche 7 und die Arbeitsfläche 8 des Tellers 3 auf einer immer größeren erhitzten Oberfläche verteilt wird, was eine effektive Erwärmung der Ausgangsmaterialteilchen durch Wärmeübertragung beim Kontakt der letzteren mit dem Teller sicherstellt.

Die zur Schwerkraft zusätzliche Anpressung der Ausgangsmaterialteilchen erhöht aufgrund der Fliehkräfte die Innigkeit ihres Kontaktes mit der erhitzten Arbeitsfläche 8 des Tellers 3 und verbessert den Wärmeübertragungprozeß. Eine solche Erwärmungsmethode ermöglicht es, die Geschwindigkeit der Relativbewegung der Teilchen des Ausgangsmaterials und folglich die Produktvität des Prozesses zu erhöhen. Dabei findet die Erwärmung der Teilchen mit einer Größe von etwa 100 $\mu$m auf die Temperatur 350 °C bei der Bewegung über den auf 1000 °C erhitzten Teller während einer Zeitspanne von 0,5 s statt. Bei Verwendung von kleineren Ausgangsmaterialteilchen, < 100 $\mu$m, läuft ihr Erwärmungsvorgang schneller ab. Ist es erforderlich, den Kontakt dieser Teilchen mit der erhitzten Oberfläche 8 des Tellers 3 zu verstärken, so wird dies durch Erhöhung der Rotationsgeschwindigkeit des Tellers erreicht. Und bei größeren Ausgangsmaterialteilchen, > 100 $\mu$m, wird die Zeit ihres Kontaktes mit der erhitzten Oberfläche 8 des Tellers 3 durch Verminderung der Rotationsgeschwindigkeit des Tellers verlängert.

Die nach dem beschriebenen Schema ausgeführte Versuchsanlage zur Wärmestoßbehandlung von schüttbaren Materialien besitzt folgende technische Daten: Gehäusedurchmesser 1400 mm, Höhe samt dem Aufgabebehälter 1880 mm, Tellerdurchmesser 1000 mm, Tellerarbeitsfläche ist kegelig, Bunkerfassungsvermögen 40 dm$^3$, Pulverdurchflußmenge bis zu 100 kg/h, Tellertemperatur von 20 bis 1100 °C, aufgenommene Leistung: im Erwärmungszustand 30 kW, im Betriebszustand von 15 bis 25 kW.

Das Verfahren wird durch folgendes Beispiel veranschaulicht:

**Beispiel 1.** Das Pulver des Eisenhydroxids $\alpha$-FeOOH (Goethit) mit 5 bis 150 $\mu$m Telchengröße wird in den Bunker in einer Menge von 40 kg aufgegeben. Die Temperatur im Aufgabebehälter wird auf einem Niveau von 180 ± 20 °C aufrechterhalten. Die Temperatur auf der Tellerarbeitsfläche wird auf einem Niveau von 700 ± 20 °C aufrechterhalten. Der Spalt des Durchflußmengenreglers beträgt ~ 0,7 mm, was einer Rohstoffdurchflußmenge von ~ 30 kg/h entspricht. Die Rotationsgeschwindigkeit der Welle ist so ausgewählt, daß die Kontaktzeit des Pulvers mit der Tellerarbeitsfläche etwa 1 s beträgt. Der Wasserverbrauch im Kühlsystem macht 180 1/h aus. Die Aufnahmeleistung der Anlage beträgt 22 kW. Das eingetragene Pulver wird während 80 min verarbeitet und als Resultat gehen in die Sammelbehälter 37 kg aktivierten Produktes über, das röntgenamorphes Eisenhydroxid und schlecht geordnetes Oxid $Fe_3O_4$ enthält. Der Energieaufwand für die Verarbeitung von Goethit beträgt ~ 2,6 kJ/g = 0,72 kW h/kg.

Somit bietet die vorliegende Erfindung die Möglichkeit, die Durchflußmenge des schüttbaren Materials zu regeln, dessen geordnete Verteilung über die erhitzte Oberfläche mit innigem Kontakt zu erreichen, die Erwärmungsgeschwindigkeit des schüttbaren Materials zu erhöhen, die Kontaktzeit des Materials mit der erhitzten Oberfläche zu verringern, die Geschwindigkeit der Abkühlung bzw. Abschreckung des Wärmebehandlungsproduktes zu erhöhen, den spezifischen Energieaufwand zu senken.

**Patentansprüche**

1.  Anlage zur Wärmestoßbehandlung von schüttbaren Materialien, enthaltend einen Behälter (1) für Ausgangsmaterial, Erhitzer (9) und einen Drehantrieb (6), **dadurch gekennzeichnet, dass** sie eine in einem Gehäuse (24) gelagerte Senkrechtwelle (4) mit einem daran befestigten Teller (3) und einen im unteren Teil eines Ausgangsmaterial-Behälters (7) angeordneten Durchflussmengenregler (2) für Material umfaßt, wobei der Drehantrieb (16) die Welle (4) in Rotation versetzt und ein System (23, 25, 26) zur Abkühlung bzw. Abschreckung der Produkte der Wärmestoßbehandlung vorhanden ist und wobei die Tellerarbeitsfläche (8) kegelig oder mit einer eine Verbreiterung nach oben sichernden Krümmung ausgebildet ist.

2.  Anlage nach Anspruch 1, **dadurch gekennzeichnet, daß** der Erhitzer (9) des Tellers (3) unter dem Teller angeordnet ist.

3.  Anlage nach Anspruch 1, **dadurch gekennzeichnet, daß** der Erhitzer (9) des Tellers (3) am Teller befestigt ist.

4.  Anlage nach Anspruch 1, **dadurch gekennzeichnet, daß** der Erhitzer (9) des Tellers (3) über dem Teller installiert ist.

5.  Anlage nach einem beliebigen der Ansprüche 1 bis 4, *dadurch gekennzeichnet,* **daß** als Erhitzer elektrische Erhitzer (9) verwendet werden.

6.  Anlage nach einem beliebigen der Ansprüche 1 bis 4, *dadurch gekennzeichnet,* **daß** als Erhitzer (9) Gasbrenner oder andere mit Brennstoff betriebene Brenner verwendet werden.

7.  Anlage nach einem beliebigen der Ansprüche 1, 2, 4, **dadurch gekennzeichnet, daß** der Erhitzer (9) des Tellers (3) in einem wärmeisolierten Grundkörper (10) des Gehäuses (24) der Anlage angebracht ist.

8.  Anlage nach Anspruch 1, **dadurch gekennzeichnet, daß** der in Axialrichtung verschiebbare Oberteil (11) des wärmeisolierten Gehäuses der Anlage mit der Arbeitsfläche (18) des Tellers (13) einen Spalt bildet, welcher in eine Abkühlungszone (26) übergeht.

9.  Anlage nach einem beliebigen der Ansprüche 1, 8, d*adurch* gekennzeichnet, daß die Abkühlungszone (26) für das Produkt der Wärmestoßbehandlung als Hohlraum ausgebildet ist, der durch die Mantelflächen des Gehäuses (24) und des Grundkörpers (10) der Anlage gebildet ist.

10. Anlage nach einem beliebigen der Ansprüche 1, 8, 9, **dadurch gekennzeichnet, daß** die Mantelflächen (24) von Gehäuse und Grundkörper (10) einer Zwangskühlung unterzogen werden.

11. Anlage nach Anspruch 1, **dadurch gekennzeichnet, daß** sie mit einem Mantel (27) zum Sammeln des Produktes versehen ist.

12. Anlage nach Anspruch 1, **dadurch gekennzeichnet, daß** sie mit Produktspeichern (28) versehen ist.

13. Anlage nach einem beliebigen der Ansprüche 1, 8, 9, 11, **dadurch gekennzeichnet, daß** die Abkühlungszone (26) mit dem Hohlraum des Mantels (27) zum Sammeln des Produktes verbunden ist.

14. Anlage nach einem beliebigen der Ansprüche 1, 9, *dadurch* gekennzeichnet, daß die Mantelfläche des Gehäuses (24) der Anlage kegelig oder anders profiliert mit Verjüngung nach unten ausgebildet ist.

15. Anlage nach Anspruch 1, **dadurch gekennzeichnet, daß** der Durchflußmengenregler (2) für Ausgangsmaterial in Form einer in Axialrichtung bewegbaren Buchse ausgebildet ist, die mit dem kegeligen oder anders profilierten Wellenteil (4) zusammenwirkt, der in die Beschickungsfläche (7) des Tellers (3) übergeht.

16. Anlage nach Anspruch 1, **dadurch gekennzeichnet, daß** der Behälter (1) für schüttbares Ausgangsmaterial mit einem Erhitzer (17) ausgestattet ist.

17. Anlage nach einem beliebigen der Ansprüche 1, 8, **dadurch gekennzeichnet, daß** der Spalt zwischen dem Teller (3) und dem Oberteil (11) des Gehäuses mit Hohlräumen (12) (14) für die Heißdampfentnahme und für die Erwärmung der Wände des Ausgangsmaterial-Behälters verbunden ist.

18. Verfahren zur Wärmestoßbehandlung von schüttbaren Materialien, welches Eintragen, Verteilen und Bewegen des Ausgangsmaterials über eine erhitzte Oberfläche, wobei die Ausgangsmaterialteilchen sich in relativer Verschiebung und in Kontakt befinden, und den Ablauf des Fertigproduktes in einen Speicher (28) umfaßt, **dadurch gekennzeichnet,**

**daß** das Ausgangsmaterial nach dem Eintragen vermischt und gleichzeitig vorgewärmt, dosiert, gleichmäßig verteilt und über die rotierende und auf eine Temperatur von 100 bis 1500°C erhitzte Oberfläche (8) bewegt wird, der Heißdampf entnommen wird, das Produkt im Augenblick des Ablaufs von der erhitzten Oberfläche abgeschrockten wird, die relative Verschiebung des Materials und der Kontakt seiner Teilchen mit der erhitzten Oberfläche durch die Wirkung von Fliehkräften zustande kommen, während die Kontaktzeit und die Kraft der Anpressung des Materials an die erhitzte Oberfläche durch Änderung ihrer Rotationsgeschwindigkeit geregelt werden.

19. Verfahren nach Anspruch 18, **dadurch gekennzeichnet,** **daß** die Abschreckung im Augenblick des Produktablaufs von der erhitzten Oberfläche durch Kontakt mit der gekühlten Oberfläche des Gründkörpers (26, 10) der Anlage erfolgt.

20. Verfahren nach einem beliebigen der Ansprüche 18, 19, **dadurch gekennzeichnet,** **daß** die Abkühlung der Oberfläche zwangsweise vorgenommen wird.

21. Verfahren nach einem beliebigen der Ansprüche 18 bis 20, **dadurch gekennzeichnet,** **daß** das Produkt auf eine Temperatur von höchstens 150°C während höchstens 5 Sekunden abgekühlt wird.

22. Verfahren nach einem beliebigen der Ansprüche 18 bis 21, **dadurch gekennzeichnet,** **daß** der Vorgang der Erwärmung-Abschreckung während 0,5 bis 5,0 Sekunden erfolgt.

23. Verfahren nach einem beliebigen der Ansprüche 18 bis 22, **dadurch gekennzeichnet, daß** die Vermischung des Ausgangsmaterials durch Drehmomentübertragung von dem Tellerantrieb (16) aus bewerkstelligt wird.

24. Verfahren nach einem beliebigen der Ansprüche 18 bis 23, **dadurch** *g***ekennzeichnet, daß** die Geschwindigkeit der Vermischung des Ausgangsmaterials durch Änderung der Übersetzungszahl des Antriebs geregelt wird.

25. Verfahren nach einem beliebigen der Ansprüche 18 bis 24, **dadurch gekennzeichnet, daß** die Dampfentnahme im Bereich des Tellers bei maximalem Heißdampfdruck geschieht.

26. Verfahren nach einem beliebigen der Ansprüche 18 bis 25, **dadurch gekennzeichnet,** **daß** beim Dosieren des schüttbaren Materials der Flächeninhalt des Dosierspaltes geändert wird.

27. Verfahren nach einem beliebigen der Ansprüche 18 bis 26, **dadurch gekennzeichnet,** **daß** mit der Änderung der Tellerdrehzahl beim Dosieren die Durchflußmenge des schüttbaren Materials konstant bleibt.

**Claims**

1. Plant for the heat shock treatment of loose materials, including a container (1) for starting material, heaters (9) and a rotary drive (6),
**characterised in that**
it comprises a vertical shaft (4) that is borne in a housing (24) and has a plate (3) attached to it, and a material flow rate regulator (2) that is arranged in the lower part of a container (7) for starting material, wherein the rotary drive (16) sets the shaft (4) into rotation and there is a system (23, 25, 26) for cooling or quenching the products of the heat shock treatment and wherein the plate working surface (8) is designed to be conical or curved in such a way that ensures a widening towards the top.

2. Plant according to claim 1, **characterised in that** the heater (9) of the plate (3) is arranged under the plate.

3. Plant according to claim 1, **characterised in that** the heater (9) of the plate (3) is fastened to the plate.

4. Plant according to claim 1, **characterised in that** the heater (9) of the plate (3) is installed over the plate.

5. Plant according to any one of the claims 1 to 4, **characterised in that** the heaters used are electric heaters (9).

6. Plant according to any one of the claims 1 to 4, **characterised in that** the heaters (9) used are gas burners or other burners operated with fuel.

7. Plant according to any one of the claims 1, 2, 4, **characterised in that** the heater (9) of the plate (3) is fitted in a heat-insulated base body (10) of the housing (24) of the plant.

8. Plant according to claim 1, **characterised in that** the upper part (11) of the heat-insulated housing of the plant, which can be moved in an axial direction, forms a gap with the working surface (18) of the plate (13), which [gap] passes over into a cooling zone (26).

9. Plant according to any one of the claims 1, 8, **characterised in that** the cooling zone (26) for the product from the heat shock treatment is designed as a hollow space that is formed by the casing surfaces of the housing (24) and of the base body (10) of the plant.

10. Plant according to any one of the claims 1, 8, 9, **characterised in that** the casing surfaces (24) of the housing and base body (10) are subjected to forced cooling.

11. Plant according to claim 1, **characterised in that** it is equipped with a casing (27) for collecting the product.

12. Plant according to claim 1, **characterised in that** it is equipped with product reservoirs (28).

13. Plant according to any one of the claims 1, 8, 9, 11, **characterised in that** the cooling zone (26) is connected to the hollow space of the casing (27), for collecting the product.

14. Plant according to any one of the claims 1, 9, **characterised in that** the casing surface of the housing (24) of the plant is designed to be conical or otherwise profiled with a narrowing towards the bottom.

15. Plant according to claim 1, **characterised in that** the flow rate regulator (2) for starting material is designed in the form of a bushing which can be moved in an axial direction and which works together with the conical or otherwise profiled shaft part (4) that passes over into the charging surface (7) of the plate (3).

16. Plant according to claim 1, **characterised in that** the container (1) for loose starting material is equipped with a heater (17).

17. Plant according to any one of the claims 1, 8, **characterised in that** the gap between the plate (3) and the upper part (11) of the housing is connected to hollow spaces (12) (14) for extracting hot steam and for heating up the walls of the container for starting material.

18. Method for the heat shock treatment of loose materials, which comprises charging, distribution and moving of the starting material over a heated surface, wherein the starting material particles are located in relative displacement and in contact, and the running off of the finished product into an reservoir (28), **characterised in that** after charging, the starting material is mixed and simultaneously pre-heated, dosed, evenly distributed and moved via the rotating surface (8) that is heated to a temperature of 100 to 1500°C, the hot steam is extracted, the product is quenched at the moment when it runs off from the heated surface, the relative displacement of the material and the contact of its particles with the heated surface come about through the action of centrifugal forces, whilst the contact time and the force of pressing of the material on the heated surface are regulated by changing its rotational speed.

19. Method according to claim 18, **characterised in that** the quenching takes place at the moment when the product runs off from the heated surface, through contact with the cooled surface of the base body (26, 10) of the plant.

20. Method according to any one of the claims 18, 19, **characterised in that** the cooling of the surface is undertaken in a forced manner.

21. Method according to any one of the claims 18 to 20, **characterised in that** the product is cooled to a temperature of at most 150°C over a period of at most 5 seconds.

22. Method according to any one of the claims 18 to 21, **characterised in that** the procedure for heating/ quenching takes place over a period of 0.5 to 5.0 seconds.

23. Method according to any one of the claims 18 to 22, **characterised in that** the mixing of the starting material is effected through torque transmission by the plate drive (16).

24. Method according to any one of the claims 18 to 23, **characterised in that** the speed at which the starting material is mixed is regulated by altering the transmission index of the drive.

25. Method according to any one of the claims 18 to 24, **characterised in that** the extraction of steam takes place in the area of the plate at maximum hot steam pressure.

26. Method according to any one of the claims 18 to 25, **characterised in that** when the loose material is dosed, the area of the dosing gap is altered.

27. Method according to any one of the claims 18 to 26, **characterised in that** with the alteration of the plate rotational speed during dosing, the flow rate of the loose material remains constant.

**Revendications**

1. Installation de traitement des matières pulvérulentes par choc thermique, comprenant une cuve (1) pour matières premières, des corps de chauffe (9) et un entraînement rotatif (6),
**caractérisée en ce que**
elle comporte un arbre vertical (4) qui est mis en oeuvre dans un logement (24) et a une plaque (3) attachée sur celui-ci, et un régulateur de débit des matières (2) qui est mis en oeuvre dans la partie inférieure d'une cuve (7) pour matières premières, dans laquelle l'entraînement rotatif (16) met l'arbre (4) en rotation et dans laquelle il y a un système (23, 25, 26) permettant le refroidissement ou la trempe des produits objets du traitement par choc thermique et dans laquelle la surface utile de la plaque (8) est conçue pour être conique ou courbe d'une telle manière à mettre en oeuvre un élargissement vers le haut.

2. Installation selon la revendication 1, **caractérisée en ce que** le corps de chauffe (9) de la plaque (3) est mis en oeuvre sous la plaque.

3. Installation selon la revendication 1, **caractérisée en ce que** le corps de chauffe (9) de la plaque (3) est fixé sur la plaque.

4. Installation selon la revendication 1, **caractérisée en ce que** le corps de chauffe (9) de la plaque (3) est installé au-dessus de la plaque.

5. Installation selon l'une quelconque des revendications 1 à 4, **caractérisée en ce que** les corps de chauffe utilisés sont des corps de chauffe électriques (9).

6. Installation selon l'une quelconque des revendications 1 à 4, **caractérisée en ce que** les corps de chauffe (9) utilisés sont des brûleurs à gaz ou des brûleurs à combustible.

7. Installation selon l'une quelconque des revendications 1, 2, 4, **caractérisée en ce** le corps de chauffe (9) de la plaque (3) est installé dans un corps de base calorifugé (10) du logement (24) de l'installation.

8. Installation selon la revendication 1, **caractérisée en ce que** la partie supérieure (11) du logement calorifugé de l'installation, qui peut être déplacé dans une direction axiale, constitue un espace avec la surface utile (18) de la plaque (13), [espace] qui passe au-dessus dans une zone de refroidissement (26).

9. Installation selon l'une quelconque des revendications 1, 8, **caractérisée en ce que** la zone de refroidissement (26) pour le produit objet du traitement par choc thermique est conçue sous la forme d'un espace creux qui est formé par les surfaces de revêtement du logement (24) et du corps de base (10) de l'installation.

10. Installation selon l'une quelconque des revendications 1, 8, 9, **caractérisée en ce que** les surfaces de revêtement (24) du logement et du corps de base (10) sont soumises à un refroidissement forcé.

11. Installation selon la revendication 1, **caractérisée en ce qu'**elle est équipée d'un carter (27) à des fins de récupération du produit.

12. Installation selon la revendication 1, **caractérisée en ce qu'**elle est équipée de réservoirs pour produit (28).

13. Installation selon l'une quelconque des revendications 1, 8, 9, 11, **caractérisée en ce que** la zone de refroidissement (26) est connectée au niveau de l'espace creux du revêtement (27), à des fins de récupération du produit.

14. Installation selon l'une quelconque des revendications 1, 9, **caractérisée en ce que** la surface de revêtement du logement (24) de l'installation est conçue pour être conique ou profilée autrement avec un rétrécissement vers le bas.

15. Installation selon la revendication 1, **caractérisée en ce que** le régulateur du débit (2) pour les matières premières est conçu sous la forme d'un manchon qui peut être déplacé dans une direction axiale et qui fonctionne de concert avec la partie conique ou autrement profilée de l'arbre (4) qui passe au-dessus dans la surface de chargement (7) de la plaque (3).

16. Installation selon la revendication 1, **caractérisée en ce que** la cuve (1) pour matières premières pulvérulentes est équipée d'un corps de chauffe (17).

17. Installation selon l'une quelconque des revendications 1, 8, **caractérisée en ce que** l'espace entre la plaque (3) et la partie supérieure (11) du logement est connecté au niveau des espaces creux (12) (14) pour extraire la vapeur chaude et pour chauffer les parois de la cuve pour matières premières.

18. Procédé de traitement des matières pulvérulentes par choc thermique, qui comporte le chargement, la distribution et le déplacement des matières premières au-dessus d'une surface chauffée, dans lequel les particules de matières premières se trouvent en déplacement relatif et en contact, et l'écoulement du produit fini dans un réservoir (28),
**caractérisé en ce que**
après le chargement, les matières premières sont mélangées et préchauffées de manière simultanée, dosées, distribuées de manière homogène et déplacées par le biais de la surface de rotation (8) qui est chauffée jusqu'à une température comprise entre 100 et 1 500°C, **en ce que** la vapeur chaude est extraite, **en ce que** le produit est trempé au moment où il s'écoule en provenance de la surface chauffée, **en ce que** le déplacement relatif des matières et le contact de ses particules avec la surface chauffée sont produits sous l'effet de l'action de forces centrifuges, alors que la durée de contact et la force de pression des matières sur la surface chauffée sont régulées en changeant sa vitesse de rotation.

19. Procédé selon la revendication 18, **caractérisé en ce que** la trempe a lieu au moment où le produit s'écoule en provenance de la surface chauffée, par contact avec la surface refroidie du corps de base (26, 10) de l'installation.

20. Procédé selon l'une quelconque des revendications 18, 19, **caractérisé en ce que** le refroidissement de la surface est effectué d'une manière forcée.

21. Procédé selon l'une quelconque des revendications 18 à 20, **caractérisé en ce que** le produit est refroidi à une température de 150°C au plus sur une période de 5 secondes au plus.

22. Procédé selon l'une quelconque des revendications 18 à 21, **caractérisé en ce que** la procédure de chauffage / de trempe a lieu sur une durée comprise entre 0,5 et 5,0 secondes.

23. Procédé selon l'une quelconque des revendications 18 à 22, **caractérisé en ce que** le mélange des matières premières est effectué sous l'effet d'une transmission de couple par l'entraînement de la plaque (16).

24. Procédé selon l'une quelconque des revendications 18 à 23, **caractérisé en ce que** la vitesse à laquelle les matières premières sont mélangées est régulée par la modification de l'indice de transmission de l'entraînement.

25. Procédé selon l'une quelconque des revendications 18 à 24, **caractérisé en ce que** l'extraction de la vapeur a lieu dans la zone de la plaque où la pression de la vapeur chaude est au maximum.

26. Procédé selon l'une quelconque des revendications 18 à 25, **caractérisé en ce que**, quand les matières pulvérulentes sont dosées, la zone de l'espace de dosage est modifiée.

27. Procédé selon l'une quelconque des revendications 18 à 26, **caractérisé en ce que**, avec la modification de la vitesse de rotation de la plaque au cours du dosage, le débit des matières pulvérulentes reste constant.

Fig. 1